(19)

Europäisches
Patentamt
European
Patent Office
Office européen
des brevets

(11)  **EP 3 096 466 A1**

(12)  **EUROPEAN PATENT APPLICATION**
published in accordance with Art. 153(4) EPC

(43) Date of publication:
**23.11.2016 Bulletin 2016/47**

(21) Application number: **14883399.9**

(22) Date of filing: **10.06.2014**

(51) Int Cl.:
**H04B 7/06** (2006.01)

(86) International application number:
**PCT/CN2014/079591**

(87) International publication number:
**WO 2015/123942 (27.08.2015 Gazette 2015/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **20.02.2014 CN 201410058819**

(71) Applicant: **ZTE Corporation**
**Shenzhen, Guangdong 518057 (CN)**

(72) Inventors:
• **LI, Jie**
**Shenzhen**
**Guangdong 518057 (CN)**

• **WU, Fengjuan**
**Shenzhen**
**Guangdong 518057 (CN)**
• **REN, Dameng**
**Shenzhen**
**Guangdong 518057 (CN)**
• **XU, Yansong**
**Shenzhen**
**Guangdong 518057 (CN)**

(74) Representative: **Awapatent AB**
**Junkersgatan 1**
**582 35 Linköping (SE)**

(54)  **METHOD AND BASE STATION FOR ENABLING BEAMFORMING**

(57)  A method and base station for enabling beamforming, wherein the method for enabling beamforming includes: establishing a downlink beam optimization model according to an integrated channel error model and a downlink model; acquiring an optimal beamforming matrix optimization goal according to the established downlink beam optimization model; respectively acquiring channel matrixes and non-ideal parameters respectively corresponding to each channel matrix of a serving cell in which the base station is located and each cell exclusive of the serving cell in a cooperative cluster in which the base station is located; and acquiring a beamforming matrix for the base station according to the each acquired channel matrix and the non-ideal parameters respectively corresponding to the each channel matrix and the optimal beamforming matrix optimization goal, the base station transmitting downlink data according to the acquired beamforming matrix. The beamforming method and base station effectively suppress the channel error of the TDD system, eliminate complex iterative calculation steps, and can effectively suppress inter-cell interference.

FIG. 1

EP 3 096 466 A1

**Description**

Technical Field

The present invention relates to the multi-cell Multi-Input Single-Output (MISO) wireless communication technology, and in particular, to a Time Division Duplex (TDD) system based method and base station for enabling beamforming.

Background of the Related Art

The evolved system using the 3rd Generation (3G) communication technology represented by Long Term Evolution (LTE) achieves periodic revolution for mobile communication after 3G. In order to further satisfy the requirements of the International Telecommunication Union International Mobile Telecommunications-Advanced (ITU IMT-Advanced) technology while also being as the evolution of the LTE technology, the 3GPP agrees on a proposal of using the LTE-Advanced (LTE-A) as the 4th Generation (4G) mobile communication technology standard. Multi-cell MIMO is one of key technologies for the LTE-A. Meanwhile, in order to satisfy the requirements for a high speed and high spectral efficiency of a system, the LTE-A uses an access manner of Orthogonal Frequency Division Multiple Access (OFDMA) in the downlink. In this way, channel frequencies may be the same at an intersected edge of two cells, and therefore a user at the cell edge may strongly interfere with a neighboring cell. This results in that in order to ensure communication traffic of the user, it needs to largely increase transmission power of the whole cell, and if low transmission power is to be ensured, the throughput of the cell may largely reduce. Therefore, inter-cell interference suppression is one of key subjects for the research on the LTE-A system.

A current research hotspot for multi-cell interference suppression is to adjust allocation of antennas for beamforming, which has a design purpose of enabling a transmitting beam to be orthogonal with a receiving antenna to the maximum limit by adjusting allocation of antennas, i.e., determining how to configure a transmitting antenna when each user transmits on each sub-carrier and how to configure the receiving antenna by a base station. The purpose of the beamforming technology is to reduce inter-cell interference by cooperating among multiple base stations.

For a multi-antenna system, a conventional solution is to gather all information in a Central Processing Unit (CPU) to calculate an optimization problem of the whole system. However, as a bandwidth of an X2 interface and calculating power of the CPU are limited, this solution is relatively difficult to achieve. As a result, it needs to use a distributed solution with less information interaction overhead and calculation overhead, and each base station acquires information of other cells through interaction, and then calculates an optimization problem of the local cell according to the local information, to acquire a solution of the system in an iterative manner. Therefore, the distributed framework has high feasibility. However, the convergence property and the convergence speed of the iteration of the algorithm under the distributed framework are also problems required to be considered, and an algorithm which requires an iterative process often has an obvious defect in terms of time. Therefore, the distributed solution does not have an application value in practical conditions.

Further, the conventional beamforming algorithm mostly assumes that the system implements ideal Channel State Information (CSI) estimation, i.e., there is no error between the estimated CSI and the actual CSI. However, in an actual Time Division Duplex (TDD) system, there are an estimation error and a delay error, which results in serious performance reduction for the conventional beamforming algorithm in the actual system.

In order to enhance the performance of the conventional beamforming algorithm in the actual system, the influence of a CSI error on the system is considered in related technologies. In the research result "Optimal MMSE beamforming for multiuser downlink with delayed CSI feedback using codebooks" in Proc. IEEEGlobecom, Houston, USA, Dec. 2011 of B. Dai, W. Xu, and C. Zhao, a channel in which the delay error and the estimation error exist at the same time is considered, and an non-ideal channel is modeled. In the literature, a robust beamforming problem in a single cell is designed based on a non-ideal channel model, and an optimal solution for the robust problem is acquired. With simulation, the literature proves that compared with the conventional beamforming algorithm, the proposed algorithm can effectively overcome the performance loss due to the two errors, i.e., the delay error and the estimation error. However, the model considered in the literature is merely limited in a range of a single cell, which does not have a practical value.

In order to enhance the performance of the conventional beamforming algorithm in the actual system and achieve a better practical value, the research result "Robust Transceiver Optimization for Downlink Coordinated Base Station Systems: Distributed Algorithm" in IEEE Trans. on Sig. Process. Vol. 60, No. 1, January 2012 of researchers Bogale, T.E., Vandendorpe, L. and Chalise, B.K. in this field considers the influence of a channel estimation error and a delay error in a multi-cell system on the system and implements calculation with the Average Mean Square Error (AMSE) as an optimization goal. In the calculation, a manner of calculation in an interactive form by alternatively optimizing transmitting beams and receiving beams is used to finally acquire an optimal solution. However, as the algorithm needs a large number of iterative steps, the engineering feasibility is not high.

Further, the 3GPP standard in industry stipulates that the uplink and the downlink of the TDD system use the same frequency band and different timeslots for communication. Therefore, the base station may estimate the channel according to a training sequence transmitted by a user in the uplink, which is also called the sounding signal. Therefore, the distributed cooperative mechanism may be designed with a mechanism specific to the TDD system as a starting point.

Based on the above requirements of the system as well as the existing academic achievements and the analysis on the standard, it needs to design a beamforming algorithm which can not only effectively suppress the channel error of the TDD system but also do not need calculation using complex iterative steps while further adapting to the communication characteristics of the TDD system.

## Summary of the Invention

The technical problem to be solved by the embodiments of the present invention is to provide a method and base station for enabling beamforming, to effectively suppress the channel error of the TDD system and eliminate complex iterative calculation steps, thereby effectively suppressing inter-cell interference.

In order to solve the above technical problem, the following solutions are used.

A method for enabling beamforming, comprises:

establishing a downlink beam optimization model according to an integrated channel error model and a downlink model;

acquiring an optimal beamforming matrix optimization goal according to the established downlink beam optimization model;

respectively acquiring channel matrixes and non-ideal parameters respectively corresponding to each channel matrix of a serving cell in which a base station is located and each cell exclusive of the serving cell in a cooperative cluster in which the base station is located; and

acquiring a beamforming matrix for the base station according to acquired each channel matrix and the non-ideal parameters corresponding to the each channel matrixes and the optimal beamforming matrix optimization goal, the base station transmitting downlink data according to the acquired beamforming matrix.

Alternatively, before establishing the downlink beam optimization model, the method further comprises: the base station establishing the integrated channel error model by using channel reciprocity of a Time Division Duplex (TDD) system.

Alternatively, the step of the base station establishing the integrated channel error model by using channel reciprocity of a TDD system comprises:

acquiring an estimation error model according to an actual value and an estimated value of Channel State Information (CSI) of the base station;

acquiring a delay error model according to an estimated value at an estimation time and an actual value at a transmission time of the CSI of the base station; and

acquiring the integrated channel error model by substituting the delay error model into the estimation error model.

Alternatively, the step of establishing a downlink beam optimization model comprises:

acquiring an integrated channel error model in a matrix form by aggregating the integrated channel error model into a matrix form;

acquiring indexes of the serving cell representing communication quality according to the acquired integrated channel error model in a matrix form and the downlink model; and

performing a summation operation on all indexes of the serving cell representing communication quality, and acquiring the downlink beam optimization model with minimizing a sum of the indexes representing communication quality as a goal and with transmission power of each base station being less than predetermined power as a constraint condition.

Alternatively, the step of acquiring indexes of the serving cell representing communication quality comprises:

acquiring the indexes of the serving cell representing communication quality according to the acquired integrated channel error model in a matrix form and the downlink model by restricting a reception coefficient of each serving cell to be the same.

Alternatively, the step of respectively acquiring channel matrixes and non-ideal parameters respectively corresponding to each channel matrix of a serving cell in which a base station is located and each cell exclusive of the serving cell in a cooperative cluster in which the base station is located comprises:

receiving first training sequence signals transmitted by all User Equipments (UEs) in the serving cell, and acquiring a channel matrix and non-ideal parameters corresponding to the channel matrix of the serving cell according to the received first training sequence signals; and

receiving second training sequence signals transmitted by all UEs in the cells exclusive of the serving cell in the cooperative cluster, and acquiring channel matrixes and non-ideal parameters corresponding to the channel matrixes of the cells exclusive of the serving cell in the cooperative cluster according to the received second training sequence signals.

Alternatively, the step of acquiring a channel matrix and non-ideal parameters corresponding to the channel matrix of the serving cell according to the received first training sequence signals comprises:

acquiring the channel matrix of the serving cell according to the received first training sequence signals by using an existing channel estimation algorithm; and

the base station acquiring the non-ideal parameters corresponding to the channel matrix of the serving cell by measuring the non-ideal parameters corresponding to the channel matrix of the serving cell according to the acquired channel matrix of the serving cell.

Alternatively, the step of acquiring channel matrixes and non-ideal parameters corresponding to the channel matrixes of the cells exclusive of the serving cell in the cooperative cluster according to the received second training sequence signals comprises:

acquiring the channel matrixes of the cells exclusive of the serving cell in the cooperative cluster according to the received second training sequence signals by using an existing channel estimation algorithm; and

the base station acquiring the non-ideal parameters corresponding to the channel matrixes of the cells exclusive of the serving cell in the cooperative cluster by measuring the non-ideal parameters corresponding to the channel matrixes of the cells exclusive of the serving cell in the cooperative cluster according to the acquired channel matrixes of the cells exclusive of the serving cell in the cooperative cluster.

Alternatively, the step of acquiring an optimal beamforming matrix optimization goal according to the established downlink beam optimization model comprises:

acquiring a lagrangian function of the downlink beam optimization model according to the downlink beam optimization model;

acquiring an optimization condition KTT of the lagrangian function of the downlink beam optimization model by performing a partial derivative operation on the lagrangian function of the downlink beam optimization model with the indexes representing communication quality and the reception coefficients as optimization variants; and

establishing a system of simultaneous equations according to the acquired optimization condition KTT with maximizing transmission power as a constraint condition and acquiring the optimal beamforming matrix optimization goal by solving the system of equations.

Alternatively, the indexes representing communication quality comprise an Average Mean Square Error (AMSE).
A base station, comprises a first establishment module, an operation module, an acquisition module and a processing module, wherein,

the first establishment module is configured to establish a downlink beam optimization model according to an integrated channel error model and a downlink model;

the operation module is configured to acquire an optimal beamforming matrix optimization goal according to the established downlink beam optimization model;

the acquisition module is configured to respectively acquire channel matrixes and non-ideal parameters respectively corresponding to each channel matrix of a serving cell in which the base station is located and each cell exclusive of the serving cell in a cooperative cluster in which the base station is located; and

the processing module is configured to acquire a beamforming matrix for the base station according to each acquired channel matrix and the non-ideal parameters corresponding to the each channel matrix and the optimal beamforming matrix optimization goal, the base station transmitting downlink data according to the acquired beamforming matrix.

Alternatively, the base station further comprises a second establishment module, wherein,

the second establishment module is configured to establish the integrated channel error model by using channel reciprocity of a Time Division Duplex (TDD) system before establishing the downlink beam optimization model.

Alternatively, the second establishment module is configured to establish the integrated channel error model by using channel reciprocity of a TDD system by means of:

acquiring an estimation error model according to an actual value and an estimated value of Channel State Information (CSI) of the base station; acquiring a delay error model according to an estimated value at an estimation time and an actual value at a transmission time of the CSI of the base station; and acquiring the integrated channel error model by substituting the delay error model into the estimation error model.

Alternatively, the first establishment module is configured to establish the downlink beam optimization model by means of:

acquiring an integrated channel error model in a matrix form by aggregating the integrated channel error model into a matrix form;

acquiring indexes of the serving cell representing communication quality according to the acquired integrated channel error model in a matrix form and the downlink model; and

performing a summation operation on all indexes of the serving cell representing communication quality, and acquiring the downlink beam optimization model with minimizing a sum of the indexes representing communication quality as a goal and with transmission power of each base station being less than predetermined power as a constraint condition.

Alternatively, the first establishment module is configured to acquire indexes of the serving cell representing communication quality by means of:

acquiring the indexes of the serving cell representing communication quality according to the acquired integrated channel error model in a matrix form and the downlink model by restricting a reception coefficient of each serving cell to be the same.

Alternatively, the acquisition module comprises a first acquisition module and a second acquisition module, wherein,

the first acquisition module is configured to receive first training sequence signals transmitted by all User Equipments (UEs) in the serving cell, and acquire a channel matrix and non-ideal parameters corresponding to the channel matrix of the serving cell according to the received first training sequence signals; and

the second acquisition module is configured to receive second training sequence signals transmitted by all UEs in the cells exclusive of the serving cell in the cooperative cluster, and acquire channel matrixes and non-ideal parameters corresponding to the channel matrixes of the cells exclusive of the serving cell in the cooperative cluster according to the received second training sequence signals.

Alternatively, the first acquisition module is configured to acquire a channel matrix and non-ideal parameters corresponding to the channel matrix of the serving cell according to the received first training sequence signals by means of:

acquiring the channel matrix of the serving cell according to the received first training sequence signals by using an existing channel estimation algorithm; and

the base station acquiring the non-ideal parameters corresponding to the channel matrix of the serving cell by measuring the non-ideal parameters corresponding to the channel matrix of the serving cell according to the acquired channel matrix of the serving cell.

Alternatively, the second acquisition module is configured to acquire channel matrixes and non-ideal parameters corresponding to the channel matrixes of the cells exclusive of the serving cell in the cooperative cluster according to the received second training sequence signals by means of:

acquiring the channel matrixes of the cells exclusive of the serving cell in the cooperative cluster according to the received second training sequence signals by using an existing channel estimation algorithm; and

the base station acquiring the non-ideal parameters corresponding to the channel matrixes of the cells exclusive of the serving cell in the cooperative cluster by measuring the non-ideal parameters corresponding to the channel matrixes of the cells exclusive of the serving cell in the cooperative cluster according to the acquired channel matrixes of the cells exclusive of the serving cell in the cooperative cluster.

Alternatively, the operation module is configured to acquire an optimal beamforming matrix optimization goal according to the established downlink beam optimization model by means of:

acquiring a lagrangian function of the downlink beam optimization model according to the downlink beam optimization model;

acquiring an optimization condition KTT of the lagrangian function of the downlink beam optimization model by performing a partial derivative operation on the lagrangian function of the downlink beam optimization model with the indexes representing communication quality and the reception coefficients as optimization variants; and

establishing a system of simultaneous equations according to the acquired optimization condition KTT with maximizing transmission power as a constraint condition, and acquiring the optimal beamforming matrix optimization goal by solving the system of equations.

Alternatively, the indexes representing communication quality comprise an Average Mean Square Error (AMSE).

The technical solution of the present application comprises: establishing a downlink beam optimization model according to an integrated channel error model and a downlink model; acquiring an optimal beamforming matrix optimization goal according to the established downlink beam optimization model; respectively acquiring channel matrixes and non-ideal parameters respectively corresponding to each channel matrix of a serving cell in which a base station is located and each cell exclusive of the serving cell in a cooperative cluster in which the base station is located; and acquiring a beamforming matrix for the base station according to the each acquired channel matrix and the non-ideal parameters respectively corresponding to each channel matrix and the optimal beamforming matrix optimization goal, the base station transmitting downlink data according to the acquired beamforming matrix. It can be known from the form of the optimal solution of the problem that the solution of the beamforming matrix of each base station has a closed form, and can be acquired through only one calculation process, which has low calculating complexity. Further, according to the above process of the algorithm, the base station only needs to calculate the closed solution once in each scheduling process without an iterative process, which is easy to achieve in engineering.

In the embodiments of the present invention, a condition that the TDD system has an estimation error and a delay error at the same time is considered, and an integrated channel error model is established for the channel of the TDD system, which achieves robustness.

Further, in the embodiments of the present invention, a solution in which a reception coefficient of each serving cell is the same is used, and minimizing a sum of indexes representing communication quality is used as a goal, which enables a solution of the beamforming matrix of each base station to have a closed form.

Finally, in the embodiments of the present invention, a cooperative mechanism among base stations is designed, which enables the present solution to have a natural distributed property in the TDD system.

Brief Description of Drawings

The accompanying drawings described herein are used to provide a better understanding of the present invention and constitute a part of this application, and the schematic embodiments of the present invention and the descriptions thereof are used to explain the present invention and do not constitute an improper definition of the present invention. In the accompanying drawings:

Fig. 1 is a flowchart of a method for enabling beamforming according to an embodiment of the present invention;

Fig. 2 is a structural diagram of a base station according to an embodiment of the present invention;

Fig. 3 is an application scene graph according to an embodiment of the present invention;

Fig. 4 is a diagram of a cell cooperative mechanism in an application scene graph according to an embodiment of the present invention;

Fig. 5 is a contrast diagram of throughput curves for the technical solution according to an embodiment of the present invention and other beamforming solutions; and

Fig. 6 is a contrast diagram of AMSE curves achieved by the technical solution according to an embodiment of the present invention and a non-robust conventional MMSE beamforming solution.

Preferred Embodiments of the Invention

The present invention will be described in detail below in conjunction with accompanying drawings and specific embodiments.

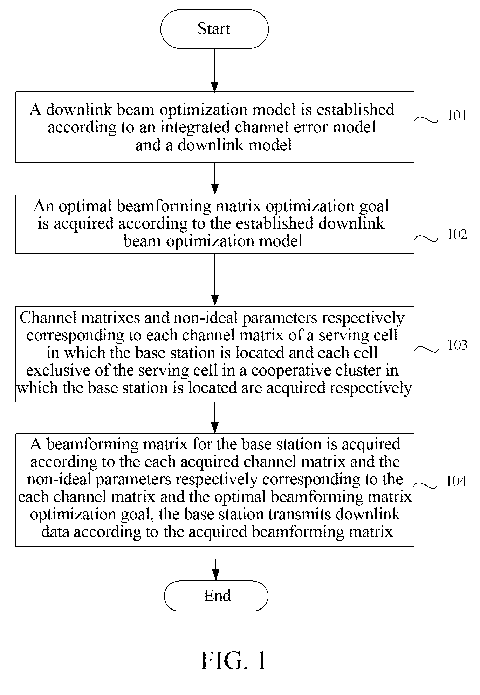

Fig. 1 is a flowchart of a method for enabling beamforming according to an embodiment of the present invention, which comprises the following steps.

In step 101, a downlink beam optimization model is established according to an integrated channel error model and a downlink model.

Further, before establishing the downlink beam optimization model, the following is further contained: the base station establishing the integrated channel error model by using channel reciprocity of a Time Division Duplex (TDD) system in the following manner.

Firstly, an estimation error model is acquired according to an actual value and an estimated value of Channel State Information (CSI) of the base station.

The channel reciprocity of the TDD system refers to that the air interface wireless propagation channels in the uplink and in the downlink are the same.

For example, the estimation error results from channel estimation characteristics of the TDD system. As the channels of the TDD system have reciprocity, the system estimates the CSI through the uplink sounding signal of the UE. Due to the non-ideality of the sounding estimation sequence, an additive estimation error may be generated. $\mathbf{h}_{mq_i}$ and $\hat{\mathbf{h}}_{mq_i}$ represent an actual value and an estimated value of the CSI of the base station respectively, and the estimation error model may be represented as $\mathbf{h}_{mq_i} = \hat{\mathbf{h}}_{mq_i} + \mathbf{R}_{Tm}^{1/2} \mathbf{e}_{mq_i}$. Wherein, $\mathbf{R}_{Tm}^{1/2}$ is an antenna related matrix of BS-m, $\mathbf{e}_{mq_i}$ is an error vector with each element complying with an independent identical distribution, and $\mathrm{E}\{\mathbf{e}_{mq_i}\mathbf{e}_{mq_i}^H\} = \sigma_{mq_i}^2 \mathbf{I}_{N_T}$ where $\sigma_{mq_i}^2$ is a power spectral density. $\mathbf{R}_{Tm}^{1/2}\mathbf{e}_{mq_i}$ represents an error value of the CSI due to the limited sounding signal when implementing channel estimation in the TDD system.

Then, a delay error model is acquired according to an estimated value at an estimation time and an actual value at a transmission time of the CSI of the base station.

For example, the delay error results from a delay between the estimation time and the downlink transmission time of the CSI of the system, and when the delay is too large, there may be a large deviation between the actual channel used for downlink transmission and the estimated CSI. If $\mathbf{h}_{mq_i}[k]$ and $\mathbf{h}_{mq_i}[k-d]$ represent CSIs at a $k^{th}$ time (data transmission time) and a k-d$^{th}$ time (CSI estimation time) respectively, the delay error model may be represented as a relationship between CSIs at the two times, i.e., $\mathbf{h}_{mq_i}[k] = \rho_{mq_i}\mathbf{h}_{mq_i}[k-d] + n_{mq_i}[k]$. Wherein, the correlation coefficient $\rho_{mq_i} = J_0(2\pi df_{q_i}T_s)$ represents correlation between CSIs at the two times, $J_0(\bullet)$ is a zero order Bessel function of the first kind, $f_{q_i}$ is a maximum Doppler frequency shift of US - $q_i$, and $T_s$ is a length of a symbol. $\mathbf{n}_{mq_i}[k]$ is an additive part of the delay error, and each element complies with a Gaussian independent identical distribution with a mean value of 0 and a power spectral density of $1 - \rho_{mq_i}^2$. $\mathbf{n}_{mq_i}[k]$ represents diversity between CSIs at two different times in the TDD system.

Finally, the integrated channel error model is acquired by substituting the delay error model into the estimation error model.

For example, the delay error model is substituted into the estimation error model to acquire the integrated channel error model, as illustrated in equation (1):

$$\mathbf{h}_{mq_i}^{H}[k] = \rho_{mq_i}\left(\hat{\mathbf{h}}_{mq_i}^{H}[k-d] + \mathbf{R}_{Tm}^{1/2}\mathbf{e}_{mq_i}^{H}[k-d]\right) + \mathbf{n}_{mq_i}^{H}[k] \qquad (1)$$

Equation (1) represents a relationship between an estimated value of the CSI at a (k-d)th time (CSI estimation time) and an actual value of the CSI at a kth time (data transmission time). If a time interval between channel estimation and downlink data transmission is known, the base station predicts that the downlink transmission data is the real CSI according to the CSI estimated at the estimation time.

Further, an integrated channel error model in a matrix form is acquired by aggregating the integrated channel error model into a matrix form.

For example, channels of a cell are aggregated into a matrix, and the integrated channel model in a matrix form is $\mathbf{H}_{mq} = \mathbf{\Psi}_{mq}\left(\hat{\mathbf{H}}_{mq} + \mathbf{R}_{Tm}^{1/2}\mathbf{E}_{mq}\right) + \mathbf{N}_{mq}$ . Wherein,

$$\mathbf{\Psi}_{mq} = diag\left\{\rho_{mq_1}, \rho_{mq_2}, ..., \rho_{mq_{K_q}}\right\},$$

$$\hat{\mathbf{H}}_{mq} = \left[\hat{\mathbf{h}}_{mq_1}[k-d], \hat{\mathbf{h}}_{mq_2}[k-d], ..., \hat{\mathbf{h}}_{mq_{K_q}}[k-d]\right]^{H},$$

$$\mathbf{E}_{mq} = \left[\mathbf{e}_{mq_1}[k-d], \mathbf{e}_{mq_2}[k-d], ..., \mathbf{e}_{mq_{K_q}}[k-d]\right]^{H},$$

and

$$\mathbf{N}_{mq} = \left[\mathbf{n}_{mq_1}[k], \mathbf{n}_{mq_2}[k], ..., \mathbf{n}_{mq_{K_q}}[k]\right]^{H}$$

Further, indexes of the serving cell representing communication quality are acquired according to the acquired integrated channel error model in a matrix form and the downlink model.

Wherein, the downlink model is a known model, and may be represented as

$$\mathbf{y}_q = \mathbf{H}_{qq}\mathbf{U}_q\mathbf{x}_q + \sum_{m \neq q}^{Q}\mathbf{H}_{mq}\mathbf{U}_m\mathbf{x}_m + \mathbf{z}_q,$$ wherein $\mathbf{y}_q = [y_{q_1}, y_{q_2}, ..., y_{q_{K_q}}]^{T}$ is signals received by UEs in a cell q, $y_{qi}$ represents a signal received by a UE numbered with i in the cell q (which is denoted as UE - $q_i$); $\mathbf{H}_{mq} = [\mathbf{h}_{mq_1}, \mathbf{h}_{mq_2}, ..., \mathbf{h}_{mq_{K_q}}]^{H}$ is channel matrixes from BS-m to all UEs of the cell q, $\mathbf{h}_{mqi}$ is an $N_T$-dimension column vector, and represents CSI between (BS-m) and (US-$q_i$); $\mathbf{U}_q$ has $N_T$ rows and $K_q$ columns, is a beamforming matrix of the base station q, and is a design goal of the embodiments of the present invention; $\mathbf{x}_q = [x_{q_i}, x_{q_2}, ..., x_{q_{K_q}}]^{T}$ is used to represent signals transmitted by BS-q, $x_{qi}$ is a scalar, and represents a useful signal to be transmitted to UE - $q_i$, and without loss of generality, it is assumed that it has unit energy, i.e., $E\left|x_{q_i}\right|^2 = 1$; and $\mathbf{z}_q = [z_{q_1}, z_{q_2}, ..., z_{q_{K_q}}]^{T}$ is a noise vector, and $z_{qi}$ is an Additive White Gaussian Noise (AWGN) with power of $\sigma^2$.

A system evaluation index MSE which represents a deviation between a desired signal and an actual signal is acquired by substituting the integrated channel error model in a matrix form into the downlink error model, and the deviation may be represented as equation (2):

$$\mathrm{MSE}_q\left(\mathbf{U},\beta\right)=\mathrm{E}_{\mathbf{x}_q,\mathbf{z}_q}\left\{\left\|\mathbf{x}_q-\beta^{-1}\mathbf{y}_q\right\|_F^2\right\}=\beta^{-2}\sum_{m\neq q}^Q\left\|\mathbf{H}_{mq}\mathbf{U}_m\right\|_F^2+\beta^{-2}\sigma^2 K_q+\left\|\mathbf{I}_{K_q}-\beta^{-1}\mathbf{H}_{qq}\mathbf{U}_q\right\|_F^2 \quad (2)$$

In equation (2), $\beta$ is a reception coefficient corresponding to the cell q, and in order to be able to acquire a closed solution for the constructed optimization problem and reduce the system overhead here, the MSE model is simplified to set a reception coefficient of each serving cell to be equal.

The base station needs to acquire an average optimization goal AMSE as the channel matrix $\mathbf{H}_{mq}$ after the integrated error model is introduced comprises a part which complies with a probability distribution, and an accurate value thereof cannot be acquired in real time in a scheduling process, and can only be designed according to the distribution characteristics thereof. The part which complies with the probability specifically comprises the Gaussian error matrix $\mathbf{E}_{mq}$ in the estimation error and the part $\mathbf{N}_{mq}$ in the delay error which is used to represent diversity between CSIs at two different times. For the cell q, the average optimization goal is represented as

$$\mathrm{AMSE}_q=\mathrm{E}_{\mathbf{H}_{mq}|\hat{\mathbf{H}}_{mq}}\left\{\mathrm{MSE}_q\right\}=K_q+\sigma_q^2 K_q-2\beta^{-1}\mathrm{Re}\left[tr\left(\boldsymbol{\Psi}_{qq}\hat{\mathbf{H}}_{qq}\mathbf{U}_q\right)\right]+\beta^{-2}\sum_{m=1}^Q tr(\mathbf{U}_m^H\mathbf{V}_{mq}\mathbf{U}_m)$$

Wherein, $\mathbf{V}_{mq}=\mathrm{E}_{\mathbf{E}_{mq},\mathbf{N}_{mq}}(\mathbf{H}_{mq}^H\mathbf{H}_{mq})=\hat{\mathbf{H}}_{mq}^H\boldsymbol{\Psi}_{mq}^2\hat{\mathbf{H}}_{mq}+\sum_{i=1}^{K_m}[(1-\rho_{mq_i}^2)\mathbf{I}_{N_T}+\sigma_{mq_i}^2\rho_{mq_i}^2\mathbf{R}_{mT}^{H,1/2}\mathbf{R}_{mT}^{1/2}]$ is a channel mean square matrix.

Wherein, the indexes representing communication quality comprise the AMSE.

Further, a summation operation is performed on all indexes of the serving cell representing communication quality, and the downlink beam optimization model is acquired with minimizing a sum of the indexes representing communication quality and transmission power of each base station being less than predetermined power as a constraint condition.

For example, the optimization problem of the whole system is constructed based on the above analysis on the model construction, and specifically, a sum of average MSEs (AMSEs) of all UEs is minimized in a condition of ensuring that transmission power of each base station is constrained by an upper limit, and the downlink beam optimization model may be expressed as:

$$\min_{\mathbf{U},\beta}\quad\sum_{q=1}^Q\mathrm{AMSE}_q$$

$$s.t.\quad\left\|\mathbf{U}_q\right\|_F^2\leq P_q,\forall q$$

In step 102, an optimal beamforming matrix optimization goal is acquired according to the established downlink beam optimization model.

This step specifically comprises:

firstly, acquiring a lagrangian function of the downlink beam optimization model according to the downlink beam optimization model;

then, acquiring an optimization condition KTT of the lagrangian function of the downlink beam optimization model by performing a partial derivative operation on the lagrangian function of the downlink beam optimization model with the indexes representing communication quality and the reception coefficients as optimization variants; and

finally, establishing a system of simultaneous equations according to the acquired optimization condition KTT with maximizing transmission power as a constraint condition, and acquiring the optimal beamforming matrix optimization goal by solving the system of equations.

This step will be exemplified below. An operation is performed on the downlink beam optimization model by using an optimization condition KTT algorithm.

The downlink beam optimization model is solved according to the KTT condition in the basic theory for optimization, and the specific steps are as follows:

(1) writing the lagrangian function for the problem:

$$L(\mathbf{U}, \beta) = \sum_{q=1}^{Q} \text{AMSE}_q + \sum_{q=1}^{Q} \lambda_q \left( tr\left( \mathbf{U}_q \mathbf{U}_q^H \right) - P_q \right)$$

,

(2) performing a partial derivative operation on the lagrangian function with respect to optimization variants for the problem, to acquire the KTT condition thereof. In the optimization problem according to the embodiments of the present invention, beamforming matrix $\left\{ \mathbf{U}_q \right\}_{q=1}^{Q}$ and reception coefficient β of each base station are used as the optimization variants, to acquire a system of equations comprised of Q+1 KTT conditions:

$$\frac{\partial L(\mathbf{U}, \beta)}{\partial \mathbf{U}_q} = -2\beta^{-1} \left( \mathbf{\Psi}_{qq} \hat{\mathbf{H}}_{qq} \right)^H + 2\beta^{-2} \sum_{m=1}^{Q} \mathbf{V}_{qm} \mathbf{U}_q + 2\lambda_q \mathbf{U}_q = 0, \forall q$$

,

and

$$\frac{\partial L}{\partial \beta} = \sum_{q=1}^{Q} -2\beta^{-3} \sigma^2 K_q + 2\beta^{-2} tr\left( \mathbf{\Psi}_{qq} \hat{\mathbf{H}}_{qq} \mathbf{U}_q \right) - 2\beta^{-3} \sum_{q=1}^{Q} \sum_{m=1}^{Q} tr\left( \mathbf{U}_m^H \mathbf{V}_{mq} \mathbf{U}_m \right) = 0$$

(3) establishing a system of equations $tr\left( \mathbf{U}_q \mathbf{U}_q^H \right) = P_q$ with maximizing transmission power of the system as a constraint condition, which is simultaneous with Q+1 KTT conditions to form a system of equations comprising Q+2 equations, so as to solve an optimal solution for the problem.

Finally, the optimal solution of the downlink beam optimization model has a form of:

$$\overline{\mathbf{U}}_q = \left[ \sum_{m=1}^{Q} \left( \hat{\mathbf{H}}_{qm}^H \mathbf{\Psi}_{qm}^2 \hat{\mathbf{H}}_{qm} + \sum_i \left| \rho_{qm_i} \right|^2 \sigma_{qm_i}^2 \mathbf{R}_{qT}^{1/2,H} \mathbf{R}_{qT}^{1/2} + \sum_i \left( 1 - \rho_{qm_i}^2 \right) \mathbf{I}_{K_q} \right) + \frac{K_q \sigma_z^2}{P_q} \mathbf{I}_{K_q} \right]^{-1} \left( \mathbf{\Psi}_{qq} \hat{\mathbf{H}}_{qq} \right)^H$$

$$\mathbf{U}_q^* = \sqrt{\frac{P_q}{tr\left( \overline{\mathbf{U}}_q^H \overline{\mathbf{U}}_q \right)}} \cdot \overline{\mathbf{U}}_q$$

It can be seen that the optimal solution $\mathbf{U}_q^*$ has a closed form, and satisfies an optimization condition $tr\left( \overline{\mathbf{U}}_q^{*H} \overline{\mathbf{U}}_q^* \right) = P_q$.

In this step, the mathematical knowledge of the optimization problem is used, and a part which is involved in this step will be explained below. It is assumed that the optimization problem to be solved is:

$$\min \quad f(x)$$

$$s.t. \quad g(x) \leq 0$$

The definition of the optimization theory is as follows: there are three steps for solving the optimization problem:

1. writing the lagrangian function for the problem. The lagrangian function has been defined in the optimization theory, and it needs to write the lagrangian function to solve any optimization problem, and the details may be known with reference to related chapters in "Theory and Algorithms of Optimization" (second edition, Tsinghua University Press), i.e., $L(x, \lambda) = f(x) + \lambda g(x)$, wherein $\lambda$ is a lagrangian dual variable.

2. performing a partial derivative operation on the lagrangian function and setting it as zero, to acquire a KTT condition for the problem (i.e., a relational expression required to be satisfied by the optimization solution):

$$\frac{\partial L(x, \lambda)}{\partial x} = 0, \frac{\partial L(x, \lambda)}{\partial \lambda} = 0$$

3. solving the equation according to the above KTT condition to acquire the optimal solution.

In conclusion, the lagrangian function for the problem can be written according to the definition:

$$L(\mathbf{U}, \beta) = \sum_{q=1}^{Q} \text{AMSE}_q + \sum_{q=1}^{Q} \lambda_q \left( tr \left( \mathbf{U}_q \mathbf{U}_q^H \right) - P_q \right).$$

In step 103, channel matrixes and non-ideal parameters respectively corresponding to each channel matrix of a serving cell in which the base station is located and each cell exclusive of the serving cell in a cooperative cluster in which the base station is located are acquired respectively.

This step comprises:

receiving first training sequence signals transmitted by all User Equipments (UEs) in the serving cell, and acquiring a channel matrix of the serving cell and non-ideal parameters corresponding to the channel matrix according to the received first training sequence signals. The step of acquiring the non-ideal parameters comprises:

acquiring the channel matrix of the serving cell according to the received first training sequence signals by using an existing channel estimation algorithm; and

the base station acquiring the non-ideal parameters corresponding to the channel matrix of the serving cell by measuring the non-ideal parameters corresponding to the channel matrix of the serving cell according to the acquired channel matrix of the serving cell.

Further, second training sequence signals transmitted by all UEs in the cells exclusive of the serving cell in the cooperative cluster are received, and channel matrixes and non-ideal parameters corresponding to the channel matrixes of the cells exclusive of the serving cell in the cooperative cluster are acquired according to the received second training sequence signals. The step of acquiring the non-ideal parameters comprises:

acquiring the channel matrixes of the cells exclusive of the serving cell in the cooperative cluster according to the received second training sequence signals by using an existing channel estimation algorithm; and

the base station acquiring the non-ideal parameters corresponding to the channel matrixes of the cells exclusive of the serving cell in the cooperative cluster by measuring the non-ideal parameters corresponding to the channel matrixes of the cells exclusive of the serving cell in the cooperative cluster according to the acquired channel matrixes of the cells exclusive of the serving cell in the cooperative cluster.

A cell cooperative mechanism is involved in this step, and the cell cooperative mechanism is specifically as follows: base stations in a cooperative cluster which has been set share UE information thereof, which comprises an ID of a cell in which the UE belongs, an ID of a cell group etc., and when a new UE joins in a certain cell by implementing cell searching, the shared UE information is updated in real time. Q base stations in the cooperative cluster are synchronous with all UEs in the cluster. In the TDD system, as the same channel is used in the uplink and the in the downlink, the base station estimates the downlink channel according to the sounding signal transmitted by the UE in the uplink. When the UE transmits the sounding signal in the uplink, the UE not only transmits the signal to its serving base station, but also transmits the signal to neighboring interfering base stations. After all UEs in the cluster complete sounding in the uplink, a base station acquires CSI information from the base station to all UEs in the cluster which are interfered by the base station, and in this process, the information which is needed to be interacted by the base stations is merely information of cell search and synchronization for the UEs. The specific process comprises the following.

In the cooperative cluster which has been formed, the base station shares the information of cell search and synchronization for all the UEs. Temporary synchronization between the base station and all the UEs (including a UE in a local cell and UEs of other cells in the cooperative cluster) is established, to enable a UE to transmit a sounding signal to its interfering base stations.

The UE transmits an uplink sounding signal to all base stations (including its serving base station and interfering base stations).

The base stations estimate a channel $\hat{\mathbf{H}}_{qq}$ in a cell and cross-cell interference channels $\{\hat{\mathbf{H}}_{qm}\}_{m \neq q}$ according to the received uplink sounding signal, measure non-ideal parameters $\left\{\rho_{qm}\right\}_{m=1}^{Q}$ and $\left\{\sigma_{qm_i}^2\right\}_{m=1}^{Q}$ corresponding to them.

In step 104, a beamforming matrix for the base station is acquired according to the each acquired channel matrix and the non-ideal parameters respectively corresponding to the each channel matrix and the optimal beamforming matrix optimization goal, the base station transmits downlink data according to the acquired beamforming matrix.

For example, the each acquired channel matrix and the non-ideal parameters respectively corresponding to the each channel matrix are substituted into the optimal beamforming matrix optimization goal to acquire the beamforming matrix for the base station. In this way, the base station can transmit downlink data according to the acquired beamforming matrix.

In the embodiments of the present invention, information which is needed to construct an optimal solution comprises three types: (1) CSI information in a cell, including an estimated value $\hat{\mathbf{H}}_{qq}$ of CSI from the BS-q to a UE in the local cell and related channel error parameters thereof $\rho_{qq}$ and $\sigma_{qq_i}^2$, the number $K_q$ of the UEs in the cell, transmission power $P_q$ of the base station, and a matrix $\mathbf{R}_{qT}^{1/2}$ related to transmission antennas; (2) cross-cell CSI information, including an estimated value $\{\hat{\mathbf{H}}_{qm}\}_{m \neq q}$ of CSI of an interference channel from the BS-q to a UE in another cell, and related channel error parameters thereof $\{\rho_{qm}\}_{m \neq q}$ and $\left\{\sigma_{qm_i}^2\right\}_{m \neq q}$; and (3) common information, including Gaussian white noise power $\sigma_z^2$. Wherein, the information in the cell and the common information are known information in the cell, and in order to achieve distributed characteristics of the optimal solution, in the embodiments of the present invention, channel reciprocity for the TDD system is used, and a cell cooperative mechanism of the TDD system which matches with the channel reciprocity is designed, to enable the base station to acquire cross-cell CSI information using information interaction as less as possible.

The advantages of the form of the optimal solution and the corresponding cooperative mechanism in the embodiments of the present invention are as follows.

(1) according to the form of the optimal beamforming matrix optimization goal, the beamforming matrix of each base station has the following closed form:

$$\overline{\mathbf{U}}_q = \left[\sum_{m=1}^{Q}\left(\hat{\mathbf{H}}_{qm}^H \mathbf{\Psi}_{qm}^2 \hat{\mathbf{H}}_{qm} + \sum_i \left|\rho_{qm_i}\right|^2 \sigma_{qm_i}^2 \mathbf{R}_{qT}^{1/2,H}\mathbf{R}_{qT}^{1/2} + \sum_i \left(1-\rho_{qm_i}^2\right)\mathbf{I}_{K_q}\right) + \frac{K_q \sigma_z^2}{P_q}\mathbf{I}_{K_q}\right]^{-1}\left(\mathbf{\Psi}_{qq}\hat{\mathbf{H}}_{qq}\right)^H$$

$$\mathbf{U}_q^* = \sqrt{\frac{P_q}{tr\left(\overline{\mathbf{U}}_q^H \overline{\mathbf{U}}_q\right)}} \cdot \overline{\mathbf{U}}_q$$

In the process of calculation, the beamforming matrix can be acquired through only one calculation process, which has low calculating complexity. Further, according to the above process of the algorithm, the base station only needs to calculate the closed solution once in each scheduling process without an iterative process, which is easy to achieve in engineering.

(2) according to the above closed form of the solution, it only comprises the CSI of the local cell, including $\hat{\mathbf{H}}_{qq}$, $\rho_{qq_i}^2$

and $\sigma_{qq_i}^2$ which are known information in the cell q; and further comprises the cross-cell CSI from the base station in the local cell to UEs in other cells, including $\hat{\mathbf{H}}_{qm}$, $\rho_{qm_i}^2$ and $\sigma_{qm_i}^2$, which can be estimated according to the uplink sounding signals transmitted by the UE in the local cell and UEs in other cells to the base station in the local cell without CSI interaction between base stations. Therefore, the required information can be acquired using limited signaling interaction, which achieves distributed solving.

(3) according to the integrated channel model of the TDD system used in the embodiments of the present invention, the algorithm not only uses a channel estimated value for optimization in the calculation process, but also considers the CSI estimation error $\mathbf{R}_{Tm}^{1/2}\mathbf{E}_{mq}$ and the delay errors $\Psi_{mq}$ and $\mathbf{N}_{mq}$ and implements optimization for averaging the goals, which has robustness.

In the embodiments of the present invention, the optimal beamforming matrix optimization goal is acquired by solving the downlink beam optimization model. That is, the optimal beamforming matrix optimization goal is an optimal solution of the downlink beam optimization model, and the beamforming matrix of each base station is a matrix with all elements being a constant, which is acquired by substituting non-ideal parameters corresponding to each base station into the optimal beamforming matrix optimization goal.

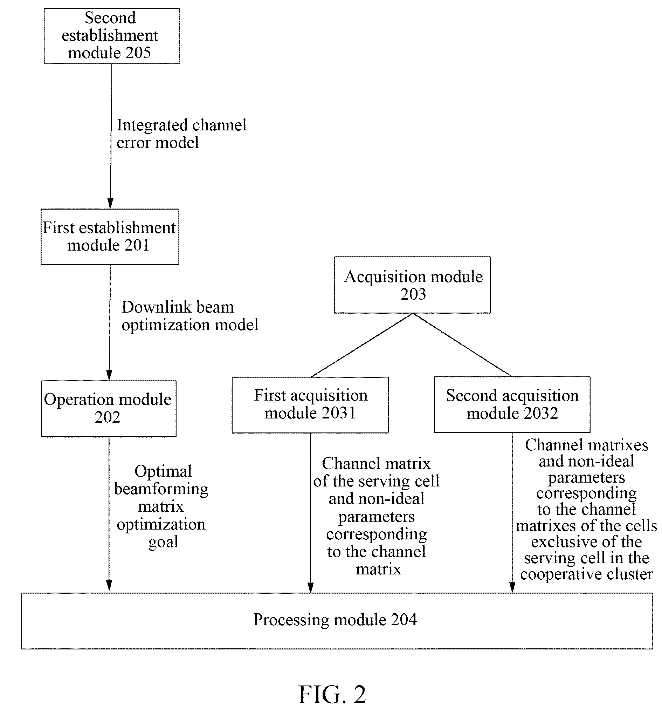

Fig. 2 is a structural diagram of a base station according to an embodiment of the present invention, which comprises a first establishment module 201, an operation module 202, an acquisition module 203 and a processing module 204. Wherein,

the first establishment module 201 is configured to establish a downlink beam optimization model according to an integrated channel error model and a downlink model. Wherein, the first establishment module is specifically used to:

acquire an integrated channel error model in a matrix form by aggregating the integrated channel error model into a matrix form;

acquire indexes of the serving cell representing communication quality according to the acquired integrated channel error model in a matrix form and the downlink model; and

perform a summation operation on all indexes of the serving cell representing communication quality, and acquire the downlink beam optimization model with minimizing a sum of the indexes representing communication quality and transmission power of each base station being less than predetermined power as a constraint condition.

In the embodiments of the present invention, the indexes representing communication quality comprise an AMSE.

The operation module 202 is configured to acquire an optimal beamforming matrix optimization goal according to the established downlink beam optimization model. Wherein, the operation module is specifically used to:

acquire a lagrangian function of the downlink beam optimization model according to the downlink beam optimization model;

acquire an optimization condition KTT of the lagrangian function of the downlink beam optimization model by performing a partial derivative operation on the lagrangian function of the downlink beam optimization model with the indexes representing communication quality and the reception coefficients as optimization variants; and

establish a system of simultaneous equations according to the acquired optimization condition KTT with maximizing transmission power as a constraint condition and acquire the optimal beamforming matrix optimization goal by solving the system of equations.

The acquisition module 203 is configured to respectively acquire channel matrixes and non-ideal parameters respectively corresponding to each channel matrix of a serving cell in which the base station is located and each cell exclusive of the serving cell in a cooperative cluster in which the base station is located.

Further, the acquisition module 203 comprises a first acquisition module 2031 and a second acquisition module 2032, wherein,

the first acquisition module 2031 is configured to receive first training sequence signals transmitted by all User Equipments (UEs) in the serving cell, and acquire a channel matrix and non-ideal parameters corresponding to the channel matrix of the serving cell according to the received first training sequence signals; wherein, the first acquisition module 2031 is configured to:

acquire the channel matrix of the serving cell according to the received first training sequence signals using an existing channel estimation algorithm; and

acquire the non-ideal parameters corresponding to the channel matrix of the serving cell by the base station measuring the non-ideal parameters corresponding to the channel matrix of the serving cell according to the acquired channel matrix of the serving cell.

The second acquisition module 2032 is configured to receive second training sequence signals transmitted by all UEs in the cells exclusive of the serving cell in the cooperative cluster, and acquire channel matrixes and non-ideal parameters corresponding to the channel matrixes of the cells exclusive of the serving cell in the cooperative cluster according to the received second training sequence signals. Wherein, the second acquisition module 2032 is configured to:

acquire the channel matrixes of the cells exclusive of the serving cell in the cooperative cluster according to the received second training sequence signals using an existing channel estimation algorithm; and

acquire the non-ideal parameters corresponding to the channel matrixes of the cells exclusive of the serving cell in the cooperative cluster by the base station measuring the non-ideal parameters corresponding to the channel matrixes of the cells exclusive of the serving cell in the cooperative cluster according to the acquired channel matrixes of the cells exclusive of the serving cell in the cooperative cluster.

The processing module 204 is configured to acquire a beamforming matrix for the base station according to each acquired channel matrix and the non-ideal parameters corresponding to the each channel matrix and the optimal beamforming matrix optimization goal, the base station transmitting downlink data according to the acquired beamforming matrix.

The base station further comprises a second establishment module 205, configured to establish the integrated channel error model using channel reciprocity of a Time Division Duplex (TDD) system before establishing the downlink beam optimization model. Wherein, the second establishment module 205 is configured to:

acquire an estimation error model according to an actual value and an estimated value of Channel State Information (CSI) of the base station;

acquire a delay error model according to an estimated value at an estimation time and an actual value at a transmission time of the CSI of the base station; and

acquire the integrated channel error model by substituting the delay error model into the estimation error model.

Wherein, the channel reciprocity of the TDD system refers to that the air interface wireless propagation channels in the uplink and in the downlink are the same.

Further, the second establishment module 205 is further configured to acquire the indexes of the serving cell representing communication quality according to the acquired integrated channel error model in a matrix form and the downlink model by restricting a reception coefficient of each serving cell to be the same.

The method for enabling beamforming according to an embodiment of the present invention will be described below in conjunction with a specific embodiment.

Embodiment one

In this embodiment, a cooperative cluster comprised of three cells is considered. Each cell comprises a base station with 2 antennas and two UEs with a single antenna, wherein a UE is also interfered by base stations of other two cells while receiving a service from the base station of the local cell. A channel in the disclosed embodiment is a Gaussian channel which is generated randomly, and its path loss coefficient is 2. Typically, parameters of the error model in the disclosed embodiment are set as $\sigma_{mq_i}^2 = 0.1, f_{q_i} T_s = 0.1$. The specific embodiment of the present invention will be described in detail below in conjunction with accompanying drawings 3 and 4.

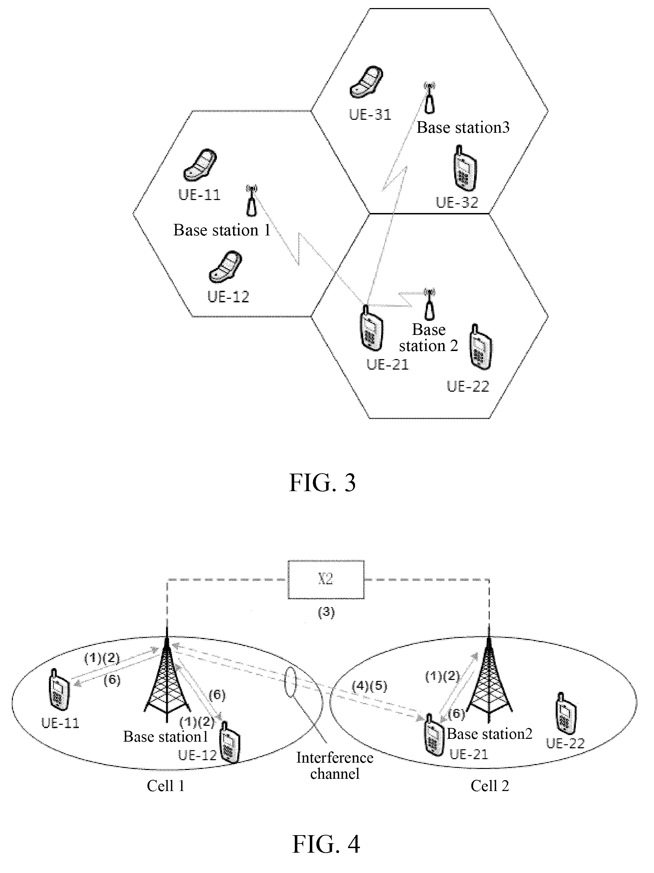

Fig. 3 is an application scene graph according to an embodiment of the present invention, which comprises base station 1, base station 2 and base station 3, and comprises users (UE-11 and UE-12) served by the base station 1, users (UE-21 and UE-22) served by the base station 2 and users (UE-31 and UE-32) served by the base station 3.

Fig. 4 is a diagram of a cell cooperative mechanism in an application scene graph according to an embodiment of the present invention. Fig. 4 explains a specific implementation of cell cooperation by taking a base station (base station 1) and a user (UE-21) served by a neighboring base station thereof (base station 2) in the scene illustrated in Fig. 3 as an example.

The cooperative mechanism provided in the embodiment of the present invention specifically describes that a base station establishes temporary synchronization with UEs in the cluster interfered by the base station before transmitting data in the downlink, receives a cross-cell uplink sounding signal, and designs a beamforming matrix using an estimated state of a cross-cell interference channel.

As shown in Fig. 4, there are two users, i.e., UE-11 and UE-12 in cell 1, and there are two users, i.e., UE-21 and UE-22 in cell 2. For the base station 1, the UE-1 and the UE-2 are its served users, and the UE-21 is its interfered user. In the process of base station cooperation, the base stations 1 and 2 firstly share information of cell searching and synchronization of the UE-11, UE-12, UE-21 and UE-22 to determine a cell to which a user belongs and position information, so as to ensure that the interfered user UE-21 of the base station 1 can establish temporary synchronization with the base station 1 and transmit an uplink sounding signal. After receiving the sounding transmitted by the UE-21, the base station 1 estimates CSI and non-ideal parameters of the cross-cell interference channel.

In the embodiment, a base station needs to cooperate with serving base stations of each UE interfered by the base station, and this example merely demonstrate a process of a base station cooperating with an interfered user in a neighboring base station.

Based on the proposed cooperative mechanism, a specific implementation process of the present embodiment is given below.

1. In a cooperative cluster (cells 1, 2 and 3) which has been formed, due to the mechanism of cell searching and random access in the 3GPP standard, each base station establishes synchronization with its served users. Each base station firstly receives sounding signals of its served users. Base station 1 receives sounding signals of UE-11 and UE-12, base station 2 receives sounding signals of UE-21 and UE-22, and base station 3 receives sounding signals of UE-31 and UE-32.

2. The base station receives an uplink sounding signal in a cell according to the sounding mode defined in step 1, so as to estimate a channel matrix $\left\{\hat{\mathbf{H}}_{qq}\right\}_{q=1}^{3}$ in the cell using an existing channel estimation algorithm, and measure corresponding non-ideal parameters $\left\{\rho_{qq_i}\right\}_{q=1}^{3}$ and $\left\{\sigma_{qq_i}^{2}\right\}_{q=1}^{3}$ thereof.

3. With reference to the cooperative mechanism described in this embodiment, the base station shares information of cell searching and synchronization of all UEs. Through the mechanism of cell searching and synchronization, temporary synchronization between the base station and its interfered UEs is established, to enable the interfered UEs to transmit a sounding signal to its base stations.

4. As described in the cooperative mechanism, each UE transmits an uplink sounding signal to its interfering base station. In the embodiment, the base station 1 receives sounding signals of UE-21, UE-22, UE-31 and UE-32, the base station 2 receives sounding signals of UE-11, UE-12, UE-31 and UE-32, and the base station 3 receives sounding signals of UE-11, UE-12, UE-21 and UE-22.

5. All base stations receive uplink sounding signals outside the cell according to the sounding mode defined in step 4, estimate a cross-cell interference channel $\left\{\hat{\mathbf{H}}_{qm}\right\}_{q\neq m}^{3}$ according to the received cross-cell uplink sounding signals using an existing channel estimation algorithm, and measure corresponding non-ideal parameters $\left\{\rho_{qm_i}\right\}_{q\neq m}^{3}$ and $\left\{\sigma_{qm_i}^{2}\right\}_{q\neq m}^{3}$ thereof.

6. The base station has acquired information required for the optimal solution, and starts to transmit data in the downlink according to the calculated optimal beamforming matrix $\left\{\mathbf{U}_{q}\right\}_{q=1}^{3}$.

The present embodiment cannot limit the solutions of the present invention, and the number of cells in the cooperative cluster is not limited, and is determined according to practical conditions. A cooperative cluster comprised of three cells is selected for convenience of description.

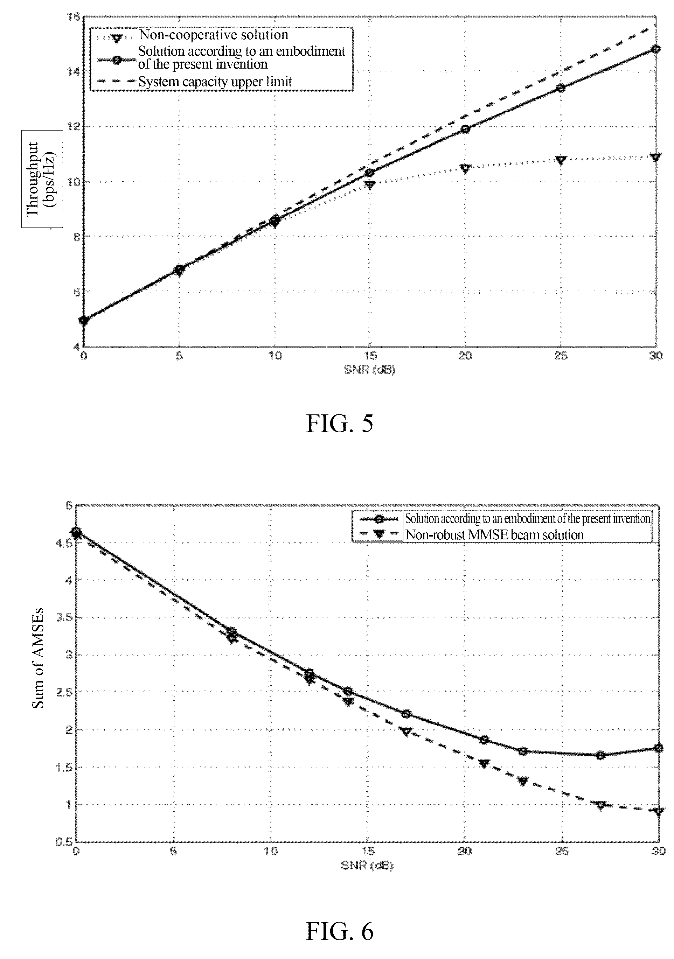

Fig. 5 is a contrast diagram of throughput curves for the technical solution according to an embodiment of the present invention and other beamforming solutions.

As shown in Fig. 5, the vertical coordinate represents throughput, the horizontal coordinate represents a signal to noise ratio, the solid line represents the solution according to an embodiment of the present invention, the dashed line represents a system capacity upper limit, and the triangular dashed line represents a non-cooperative solution. Through simulation, the results show that the optimal solution of the present embodiment can effectively approach the system throughput upper limit of the scene illustrated in Fig. 1. Fig. 5 is a contrast diagram of throughput curves when the technical solution according to an embodiment of the present invention, the system capacity upper limit, and the non-cooperative solution are used respectively while the Signal to Noise Ratio (SNR) of the system increases from 0dB to 30dB in the disclosed embodiment. In the system capacity upper limit solution, each cell uses a different reception coefficient $\beta_q$, and the transmitting beamforming matrix $U_q$ and $\beta_q$ need to be iterated in turn to solve the optimal solution, and the achieved optimal solution is the system capacity upper limit in ideal conditions. In the non-cooperative solution, the idea of the game theory is used, UEs of each cell process interference as a noise and only optimize the AMSE of the local cell, and in the process of solving, it only needs to use a channel in the cell without information interaction among various cells. As various base stations are in a competing relationship in the non-cooperative solution, the overall throughput thereof cannot acquire an effective gain from the SNR. It can be seen from Fig. 5 that the system throughput achieved by the disclosed embodiment is obviously higher than the compared non-cooperative solution based on the idea of the game theory, and can sufficiently approach the system capacity upper limit.

Fig. 6 is a contrast diagram of AMSE curves achieved by the technical solution according to an embodiment of the present invention and a non-robust conventional MMSE beamforming solution.

As shown in Fig. 6, the vertical coordinate represents a sum of AMSEs, the horizontal coordinate represents a signal to noise ratio, the solid line represents a solution according to an embodiment of the present invention, and the dashed line represents a non-robust MMSE beam solution. It can also been observed in the simulation result that the present embodiment has a function of suppressing the channel estimation error and the delay error. Fig. 6 is a contrast diagram of AMSE curves when the technical solution according to an embodiment of the present invention and the non-robust MMSE beam solution are used respectively while the SNR of the system increases from 0dB to 30dB. The compared MMSE beam solution solves the MSE and the minimization problem to acquire the optimization solution on the premise that both the CSI estimation error and the delay error do not exist. The MMSE beam is equivalent to non-ideal parameters for minimizing the AMSE robust beam in the embodiment of the present invention, it is a degradation form of the embodiment of the present invention, and does not have robustness. It can be seen from Fig. 6 that the non-robust MMSE beam solution cannot effectively acquire a gain from the SNR. On the contrary, as too large transmission power may increase the performance loss due to the CSI error, under a higher SNR, the AMSE of the system instead increases with the increase of SNR. The solution of the disclosed embodiment can effectively solve this problem, and can effectively acquire a gain when the SNR increases, effectively suppress the CSI error and improve the throughput.

The above description is only the preferred embodiment of the present invention and is not intended to limit the protection scope of the present invention. Any modification, equivalent substitution, improvement etc. made within the essence and principle of the present invention should be included within the protection scope of the present invention.

Industrial applicability

In the embodiments of the present invention, a condition that the TDD system has an estimation error and a delay error at the same time is considered, and an integrated channel error model is established for the channel of the TDD system, which achieves robustness. Further, in the embodiments of the present invention, a solution in which a reception coefficient of each serving cell is the same is used, and minimizing a sum of indexes representing communication quality is used as a goal, which enables a solution of the beamforming matrix of each base station to have a closed form. Finally, in the embodiments of the present invention, a cooperative mechanism among base stations is designed, which enables the present solution to have a natural distributed property in the TDD system. Therefore, the present invention has strong industrial applicability.

**Claims**

1. A method for enabling beamforming, comprising:

   establishing a downlink beam optimization model according to an integrated channel error model and a downlink model;
   acquiring an optimal beamforming matrix optimization goal according to the established downlink beam optimization model;
   respectively acquiring channel matrixes and non-ideal parameters respectively corresponding to each channel matrix of a serving cell in which a base station is located and each cell exclusive of the serving cell in a cooperative cluster in which the base station is located; and

acquiring a beamforming matrix for the base station according to acquired each channel matrix and the non-ideal parameters corresponding to the each channel matrix and the optimal beamforming matrix optimization goal, the base station transmitting downlink data according to the acquired beamforming matrix.

2. The method according to claim 1, wherein before establishing the downlink beam optimization model, the method further comprises: the base station establishing the integrated channel error model by using channel reciprocity of a Time Division Duplex (TDD) system.

3. The method according to claim 2, wherein the step of the base station establishing the integrated channel error model by using channel reciprocity of a TDD system comprises:

   acquiring an estimation error model according to an actual value and an estimated value of Channel State Information (CSI) of the base station;

   acquiring a delay error model according to an estimated value at an estimation time and an actual value at a transmission time of the CSI of the base station; and

   acquiring the integrated channel error model by substituting the delay error model into the estimation error model.

4. The method according to claim 1, wherein the step of establishing a downlink beam optimization model comprises:

   acquiring an integrated channel error model in a matrix form by aggregating the integrated channel error model into a matrix form;

   acquiring indexes of the serving cell representing communication quality according to the acquired integrated channel error model in a matrix form and the downlink model; and

   performing a summation operation on all indexes of the serving cell representing communication quality, and acquiring the downlink beam optimization model with minimizing a sum of the indexes representing communication quality as a goal and with transmission power of each base station being less than predetermined power as a constraint condition.

5. The method according to claim 4, wherein the step of acquiring indexes of the serving cell representing communication quality comprises:

   acquiring the indexes of the serving cell representing communication quality according to the acquired integrated channel error model in a matrix form and the downlink model by restricting a reception coefficient of each serving cell to be the same.

6. The method according to claim 1, wherein the step of respectively acquiring channel matrixes and non-ideal parameters respectively corresponding to each channel matrix of a serving cell in which a base station is located and each cell exclusive of the serving cell in a cooperative cluster in which the base station is located comprises:

   receiving first training sequence signals transmitted by all User Equipments (UEs) in the serving cell, and acquiring a channel matrix and non-ideal parameters corresponding to the channel matrix of the serving cell according to the received first training sequence signals; and

   receiving second training sequence signals transmitted by all UEs in the cells exclusive of the serving cell in the cooperative cluster, and acquiring channel matrixes and non-ideal parameters corresponding to the channel matrixes of the cells exclusive of the serving cell in the cooperative cluster according to the received second training sequence signals.

7. The method according to claim 6, wherein the step of acquiring a channel matrix and non-ideal parameters corresponding to the channel matrix of the serving cell according to the received first training sequence signals comprises:

   acquiring the channel matrix of the serving cell according to the received first training sequence signals by using an existing channel estimation algorithm; and

   the base station acquiring the non-ideal parameters corresponding to the channel matrix of the serving cell by measuring the non-ideal parameters corresponding to the channel matrix of the serving cell according to the acquired channel matrix of the serving cell.

8. The method according to claim 6, wherein the step of acquiring channel matrixes and non-ideal parameters corresponding to the channel matrixes of the cells exclusive of the serving cell in the cooperative cluster according to the received second training sequence signals comprises:

acquiring the channel matrixes of the cells exclusive of the serving cell in the cooperative cluster according to the received second training sequence signals by using an existing channel estimation algorithm; and
the base station acquiring the non-ideal parameters corresponding to the channel matrixes of the cells exclusive of the serving cell in the cooperative cluster by measuring the non-ideal parameters corresponding to the channel matrixes of the cells exclusive of the serving cell in the cooperative cluster according to the acquired channel matrixes of the cells exclusive of the serving cell in the cooperative cluster.

9. The method according to claim 1, wherein the step of acquiring an optimal beamforming matrix optimization goal according to the established downlink beam optimization model comprises:

acquiring a lagrangian function of the downlink beam optimization model according to the downlink beam optimization model;
acquiring an optimization condition KTT of the lagrangian function of the downlink beam optimization model by performing a partial derivative operation on the lagrangian function of the downlink beam optimization model with the indexes representing communication quality and the reception coefficients as optimization variants; and
establishing a system of simultaneous equations according to the acquired optimization condition KTT with maximizing transmission power as a constraint condition, and acquiring the optimal beamforming matrix optimization goal by solving the system of equations.

10. The method according to claim 4, wherein the indexes representing communication quality comprise an Average Mean Square Error (AMSE).

11. A base station, comprising a first establishment module, an operation module, an acquisition module and a processing module, wherein,
the first establishment module is configured to establish a downlink beam optimization model according to an integrated channel error model and a downlink model;
the operation module is configured to acquire an optimal beamforming matrix optimization goal according to the established downlink beam optimization model;
the acquisition module is configured to respectively acquire channel matrixes and non-ideal parameters respectively corresponding to each channel matrix of a serving cell in which the base station is located and each cell exclusive of the serving cell in a cooperative cluster in which the base station is located; and
the processing module is configured to acquire a beamforming matrix for the base station according to each acquired channel matrix and the non-ideal parameters corresponding to the each channel matrix and the optimal beamforming matrix optimization goal, the base station transmitting downlink data according to the acquired beamforming matrix.

12. The base station according to claim 11, further comprising a second establishment module, wherein,
the second establishment module is configured to establish the integrated channel error model by using channel reciprocity of a Time Division Duplex (TDD) system before establishing the downlink beam optimization model.

13. The base station according to claim 12, wherein the second establishment module is configured to establish the integrated channel error model by using channel reciprocity of a TDD system by means of:

acquiring an estimation error model according to an actual value and an estimated value of Channel State Information (CSI) of the base station; acquiring a delay error model according to an estimated value at an estimation time and an actual value at a transmission time of the CSI of the base station; and acquiring the integrated channel error model by substituting the delay error model into the estimation error model.

14. The base station according to claim 11, wherein the first establishment module is configured to establish the downlink beam optimization model by means of:

acquiring an integrated channel error model in a matrix form by aggregating the integrated channel error model into a matrix form;
acquiring indexes of the serving cell representing communication quality according to the acquired integrated channel error model in a matrix form and the downlink model; and

performing a summation operation on all indexes of the serving cell representing communication quality, and acquiring the downlink beam optimization model with minimizing a sum of the indexes representing communication quality as a goal and with transmission power of each base station being less than predetermined power as a constraint condition.

15. The base station according to claim 14, wherein the first establishment module is configured to acquire indexes of the serving cell representing communication quality by means of:

acquiring the indexes of the serving cell representing communication quality according to the acquired integrated channel error model in a matrix form and the downlink model by restricting a reception coefficient of each serving cell to be the same.

16. The base station according to claim 11, wherein the acquisition module comprises a first acquisition module and a second acquisition module, wherein,
the first acquisition module is configured to receive first training sequence signals transmitted by all User Equipments (UEs) in the serving cell, and acquire a channel matrix and non-ideal parameters corresponding to the channel matrix of the serving cell according to the received first training sequence signals; and
the second acquisition module is configured to receive second training sequence signals transmitted by all UEs in the cells exclusive of the serving cell in the cooperative cluster, and acquire channel matrixes and non-ideal parameters corresponding to the channel matrixes of the cells exclusive of the serving cell in the cooperative cluster according to the received second training sequence signals.

17. The base station according to claim 16, wherein the first acquisition module is configured to acquire a channel matrix and non-ideal parameters corresponding to the channel matrix of the serving cell according to the received first training sequence signals by means of:

acquiring the channel matrix of the serving cell according to the received first training sequence signals by using an existing channel estimation algorithm; and
the base station acquiring the non-ideal parameters corresponding to the channel matrix of the serving cell by measuring the non-ideal parameters corresponding to the channel matrix of the serving cell according to the acquired channel matrix of the serving cell.

18. The base station according to claim 16, wherein the second acquisition module is configured to acquire channel matrixes and non-ideal parameters corresponding to the channel matrixes of the cells exclusive of the serving cell in the cooperative cluster according to the received second training sequence signals by means of:

acquiring the channel matrixes of the cells exclusive of the serving cell in the cooperative cluster according to the received second training sequence signals by using an existing channel estimation algorithm; and
the base station acquiring the non-ideal parameters corresponding to the channel matrixes of the cells exclusive of the serving cell in the cooperative cluster by measuring the non-ideal parameters corresponding to the channel matrixes of the cells exclusive of the serving cell in the cooperative cluster according to the acquired channel matrixes of the cells exclusive of the serving cell in the cooperative cluster.

19. The base station according to claim 11, wherein the operation module is configured to acquire an optimal beamforming matrix optimization goal according to the established downlink beam optimization model by means of:

acquiring a lagrangian function of the downlink beam optimization model according to the downlink beam optimization model;
acquiring an optimization condition KTT of the lagrangian function of the downlink beam optimization model by performing a partial derivative operation on the lagrangian function of the downlink beam optimization model with the indexes representing communication quality and the reception coefficients as optimization variants; and
establishing a system of simultaneous equations according to the acquired optimization condition KTT with maximizing transmission power as a constraint condition, and acquiring the optimal beamforming matrix optimization goal by solving the system of equations.

20. The base station according to claim 14, wherein the indexes representing communication quality comprise an Average Mean Square Error (AMSE).

Start

A downlink beam optimization model is established according to an integrated channel error model and a downlink model ~ 101

An optimal beamforming matrix optimization goal is acquired according to the established downlink beam optimization model ~ 102

Channel matrixes and non-ideal parameters respectively corresponding to each channel matrix of a serving cell in which the base station is located and each cell exclusive of the serving cell in a cooperative cluster in which the base station is located are acquired respectively ~ 103

A beamforming matrix for the base station is acquired according to the each acquired channel matrix and the non-ideal parameters respectively corresponding to the each channel matrix and the optimal beamforming matrix optimization goal, the base station transmits downlink data according to the acquired beamforming matrix ~ 104

End

FIG. 1

```
┌─────────────────┐
│     Second      │
│  establishment  │
│   module 205    │
└─────────────────┘
         │
         │  Integrated channel
         │  error model
         ▼
┌─────────────────┐
│First establishment│
│    module 201   │
└─────────────────┘
         │
         │  Downlink beam
         │  optimization model
         ▼
┌─────────────────┐        ┌─────────────────┐
│ Operation module│        │Acquisition module│
│      202        │        │      203        │
└─────────────────┘        └─────────────────┘
         │                  ╱              ╲
         │                 ╱                ╲
         │  Optimal  ┌──────────────┐  ┌──────────────┐
         │beamforming│First acquisition│ │Second acquisition│
         │  matrix   │ module 2031  │  │ module 2032  │
         │optimization└──────────────┘  └──────────────┘
         │   goal          │                   │
         │        Channel matrix    Channel matrixes
         │        of the serving cell  and non-ideal
         │        and non-ideal        parameters
         │        parameters          corresponding
         │        corresponding       to the channel
         │        to the channel     matrixes of the cells
         │          matrix           exclusive of the
         │             │             serving cell in the
         │             │             cooperative cluster
         ▼             ▼                   │
┌───────────────────────────────────────────────────────┐
│             Processing module 204                      │
└───────────────────────────────────────────────────────┘
```

FIG. 2

FIG. 3

FIG. 4

FIG. 5

FIG. 6

# INTERNATIONAL SEARCH REPORT

| International application No. |
|---|
| PCT/CN2014/079591 |

**A. CLASSIFICATION OF SUBJECT MATTER**

H04B 7/06 (2006.01) i

According to International Patent Classification (IPC) or to both national classification and IPC

**B. FIELDS SEARCHED**

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNABS, CNKI, VEN: beamforming, estimat+, error, optimiz+, AMSE

**C. DOCUMENTS CONSIDERED TO BE RELEVANT**

| Category* | Citation of document, with indication, where appropriate, of the relevant passages | Relevant to claim No. |
|---|---|---|
| X | CN 103595453 A (UNIV SHANGHAI JIAOTONG) 19 February 2014 (19.02.2014) claims 1-9, description, paragraphs [0044]-[0101] | 1-20 |
| A | CN 103245956 A (UNIV HARBIN ENG) 14 August 2013 (14.08.2013) the whole document | 1-20 |
| A | CN 102142876 A (UNIV XIAN JIAOTONG) 03 August 2011 (03.08.2011) the whole document | 1-20 |
| A | CN 1533065 A (ZTE CORP.) 29 September 2004 (29.09.2004) the whole document | 1-20 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 October 2014 | 04 November 2014 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>GU, Bo<br><br>Telephone No. (86-10) 62411316 |

Form PCT/ISA/210 (second sheet) (July 2009)

## INTERNATIONAL SEARCH REPORT
Information on patent family members

International application No.

PCT/CN2014/079591

| Patent Documents referred in the Report | Publication Date | Patent Family | Publication Date |
|---|---|---|---|
| CN 103595453 A | 19 February 2014 | None | |
| CN 103245956 A | 14 August 2013 | None | |
| CN 102142876 A | 03 August 2011 | CN 102142876 B | 14 August 2013 |
| CN 1533065 A | 29 September 2004 | CN 100502268 C | 17 June 2009 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. DAI ; W. XU ; C. ZHAO.** Optimal MMSE beamforming for multiuser downlink with delayed CSI feedback using codebooks. *Proc. IEEEGlobecom,* December 2011

- **BOGALE, T.E. ; VANDENDORPE, L. ; CHALISE, B.K.** Robust Transceiver Optimization for Downlink Coordinated Base Station Systems: Distributed Algorithm. *IEEE Trans. on Sig. Process.,* January 2012, vol. 60 (1
- Theory and Algorithms of Optimization. Tsinghua University Press